# EUROPEAN PATENT SPECIFICATION

(11) **EP 2 526 011 B1**
(45) Date of publication and mention of the grant of the patent: **19.03.2014**
(21) Application number: 11706942.7
(22) Date of filing: 21.01.2011
(51) Int. Cl.: B62M 9/12, B62M 9/10

(54) **SPROCKET MOUNTING CARRIER FOR A BICYCLE**
RITZELTRÄGER FÜR EIN FAHRRAD
SUPPORT DE PIGNON POUR BICYCLETTE

(30) Priority: 21.01.2010 NL 2004127
(43) Date of publication of application: 28.11.2012
(73) Proprietor: Hoek, Van Robertus Cornelius Wilhelmus, 5251 EL Vlijmen (NL)
(72) Inventor: Hoek, Van Robertus Cornelius Wilhelmus, 5251 EL Vlijmen (NL)
(74) Representative: Verhees, Godefridus Josephus Maria
(86) International application number: PCT/NL2011/050040
(87) International publication number: WO 2011/090383

(56) References cited:
- EP-A1- 1 616 781
- DE-U1-202009 006 385

## Description

### Field of the invention

The invention relates to a sprocket mounting carrier for a bicycle for carrying first sprockets which have a central hole of which the bounding wall has at least four first cams projecting inwardly and whose tops are present on a circle that has a first top diameter, which sprocket mounting carrier comprises a cylindrical body having an outside with an outside diameter, the cylindrical body on the outside being provided with at least four first grooves extending in axial direction and whose bottoms are present on a circle that has a first bottom diameter, in which first grooves, in the event of the presence of a first sprocket on the sprocket mounting carrier, the first cams are present, and the cams engage with the grooves and/or the bounding wall engages with the outside of the cylindrical body, so as to achieve that the first sprocket both in radial direction and in at least one tangential direction cannot move or can hardly move relative to the sprocket mounting carrier.

This incapability of moving relative to each other in radial direction may be realized in that at least two mutually opposite tops of the first cams are present against or substantially against the bottoms of the first grooves and/or the bounding wall of the central hole in the first sprockets at two locations opposite to each other is present against or substantially against the outside of the cylindrical body of the sprocket mounting carrier and/or the top of at least one of the cams is present against or substantially against the bottom of one of the first grooves and at at least one location opposite to this cam the bounding wall is present against or substantially against the outside of the cylindrical body. The incapability of moving relative to each other in at least one tangential direction may be realized by the fact that at least one of the side walls of at least one of the cams is present against or substantially against the opposite side wall of the bounding wall of one of the first grooves.

Preferably, in both tangential directions, the first sprocket cannot move or can hardly move relative to the sprocket mounting carrier. This may be caused by the fact that at least two side walls (one on the left and one on the right) of one or more of the cams are present against or substantially against the opposite side walls of the bounding wall of one or more of the first grooves.

For the benefit of fixing the sprockets to the sprocket mounting carrier it is obviously preferred for the bounding wall and outside wall as well as the tops and side walls of the cams and the bottoms and side walls of the grooves to be in contact with each other or substantially with each other (necessary manufacturing tolerances) over as large a surface as possible.

The invention more particularly relates to a sprocket mounting carrier that is used in a bicycle equipped with a derailleur. A derailleur forms part of a bicycle by which the bicycle chain can be moved from one gear wheel to another gear wheel, so that the gear ratio of the bicycle can be influenced. To this end there are a plurality of sprockets attached to the sprocket mounting carrier in axial direction side by side.

Engagement in this respect is to be understood to mean that at least a plurality of the cams are in contact with the bounding walls of the grooves. After being mounted, the tops and the side walls of the cams are present against or at a little distance from the bottoms and side walls of the bounding wall of the grooves. Due to manufacturing tolerances the cams will always be present while having a slight clearance in the grooves. During operation this clearance will often be neutralized because the sprockets will transfer the torque produced via the chain to the sprocket mounting carrier. The side walls of the cams then come into contact with the side walls of the grooves. During the mounting of the sprocket on the sprocket mounting carrier usually one or two of the cams will hit with their tops against the bottoms of the grooves, for example as a result of gravity. The other cams are then positioned at a slight distance from the bottoms of the cams. As a result, in both radial and tangential direction the first sprocket cannot move or can hardly move with respect to the sprocket mounting carrier.

### State of the art

A sprocket mounting carrier of this type is known from EP-A-1 721 823 (Shimano). This known sprocket mounting carrier is designed for carrying sprockets that have a bounding wall that closely fits around the sprocket mounting carrier. These sprockets are also known from this patent application. In addition to this known sprocket applied most there is another much applied sprocket available with another shape of the bounding wall of the central hole known from US-A-5,782,712 (Campagnolo). The latter sprocket does not fit on the known sprocket mounting carrier mentioned above, but another sprocket mounting carrier has been designed for this to
which the aforementioned sprockets in their turn do not fit. As a result, sprocket mounting carriers of one type as well as sprocket mounting carriers of the other type are
currently used and bicycle shops, bicycle repair shops, wholesale businesses etc. are to
be stockists of both types of sprocket mounting carriers.

DE 20 2009 006 385 U1 discloses a carrier having the features of the preamble of claim 1.

### Summary of the invention

It is an object of the invention to provide a sprocket mounting carrier of the type defined in the opening paragraph that can carry sprockets of one type as well as sprockets of the other type. To this end the sprocket mounting carrier according to the invention is characterised in that the sprocket mounting carrier is furthermore suitable for carrying second sprockets that have a further central hole whose bounding wall is provided with at least six second cams projecting inwardly and whose tops are present on a circle that has a second top diameter, the outside wall of the cylindrical body further accommodating at least five second grooves whose bottoms are present on a circle that has a second bottom diameter, where the first bottom diameter is smaller than the second bottom diameter, which second grooves in the presence of a second sprocket on the sprocket mounting carrier engage with the second cams, and/or the bounding wall of the further central hole engages with the outside of the cylindrical body in the same manner as is the case with the first sprockets. The first bottom diameter is thus slightly smaller than the first top diameter and the second bottom diameter is slightly smaller than the second top diameter.

Up until now, the radial clearance between the sprockets and the sprocket mounting carrier has been reduced by making the diameter of the bounding wall of the central hole in the sprocket equal to the diameter of the outside wall of the cylindrical body of the sprocket mounting carrier or slightly bigger in view of manufacturing tolerances. Since the diameters of the holes in the first and second sprockets were different from each other, it was thought to be well-nigh impossible to manufacture one sprocket mounting carrier on which sprockets of the first type and second type could be mounted. With the sprocket mounting carrier of the present invention the fixation of the sprockets to the sprocket mounting carrier in radial direction is obtained by having the tops of the cams of the sprockets engage with the bottoms of the grooves in the sprocket mounting carrier and making the diameter of the outside wall smaller than that of the smallest hole in the sprockets. Thanks to these measures a sprocket mounting carrier is obtained on which both sprockets of the first type and second type can be mounted.

The second sprocket can be mounted with one of the second cams in one of the first grooves. In consequence, there is no need for six second grooves to be available but only a minimum of five. Actually, the lacking second groove completely fits entirely within the first groove and a plurality of the second grooves will partly overlap with a plurality of the first grooves. Needless to observe that six second grooves are allowed to be present indeed if the second sprocket is not mounted with one of the cams sticking into one of the first grooves.

The bounding wall of the second sprockets may also have nine tops in lieu of six. For mounting such sprockets too on the sprocket mounting carrier according to the invention, an embodiment of the sprocket mounting carrier accommodates at least eight second grooves in the outside wall of the cylindrical body.

A further embodiment of the sprocket mounting carrier according to the invention is characterised in that the first gear wheels comprise at least one boss located beside one of the first cams and adjoining same, the top of which boss being present on a circle that has a third top diameter which is larger than the first top diameter and smaller than the second top diameter, a recess being present in the sprocket mounting carrier beside one of the first grooves and arranged as a continuation of this first groove, the bottom of this recess being present on a circle that has a third bottom diameter which is larger than the first bottom diameter and smaller than the second bottom diameter and is equal to or slightly smaller than the third top diameter.

### Brief description of the drawings.

The invention will be elucidated more fully below based on an example of embodiment of the sprocket mounting carrier according to the invention while reference is made to the appended drawing figures, in which:
Fig. 1 shows a bicycle comprising a sprocket mounting carrier according to the invention;
Fig. 2 shows a rear axle of a bicycle with the attached sprocket mounting carrier and mounted sprockets;
Fig. 3 shows a perspective view of the sprocket mounting carrier according to the invention;
Fig. 4 shows a cross-sectional view of the sprocket mounting carrier shown in Fig. 3;
Fig. 5 shows a sprocket of the first type present on the sprocket mounting carrier according to the invention; and
Fig. 6 shows a sprocket of the second type present on the sprocket mounting carrier according to the invention.

### Detailed description of the drawings.

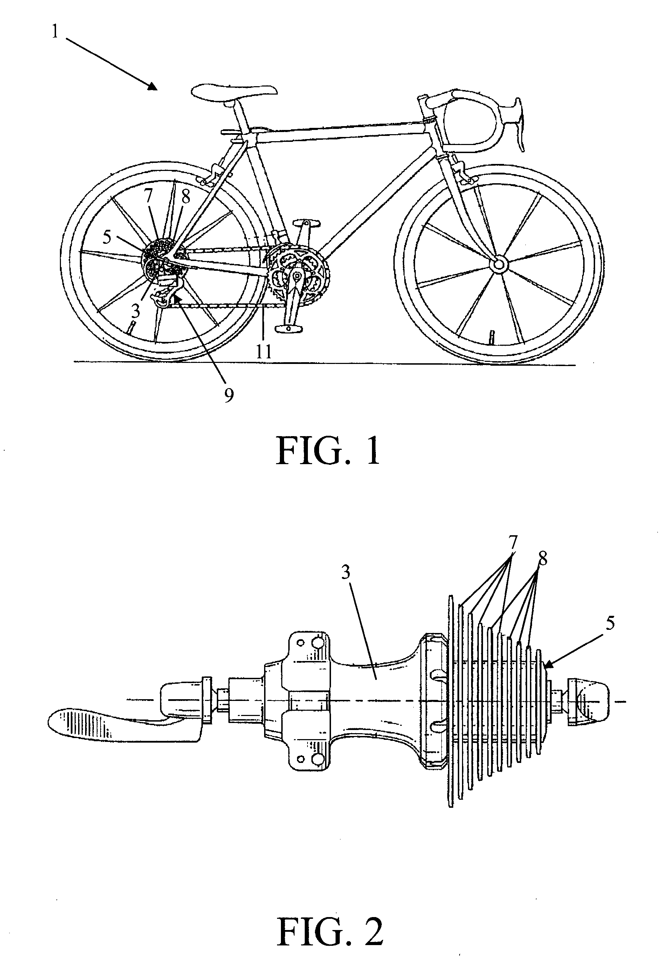

Fig. 1 shows a bicycle I comprising a rear axle 3 with a sprocket mounting carrier 5 attached to it on which sprockets 7 are located. The bicycle I furthermore includes a derailleur 9 by which the bicycle chain 11 can be moved from one sprocket to the other sprocket to change the gear ratio of the bicycle.

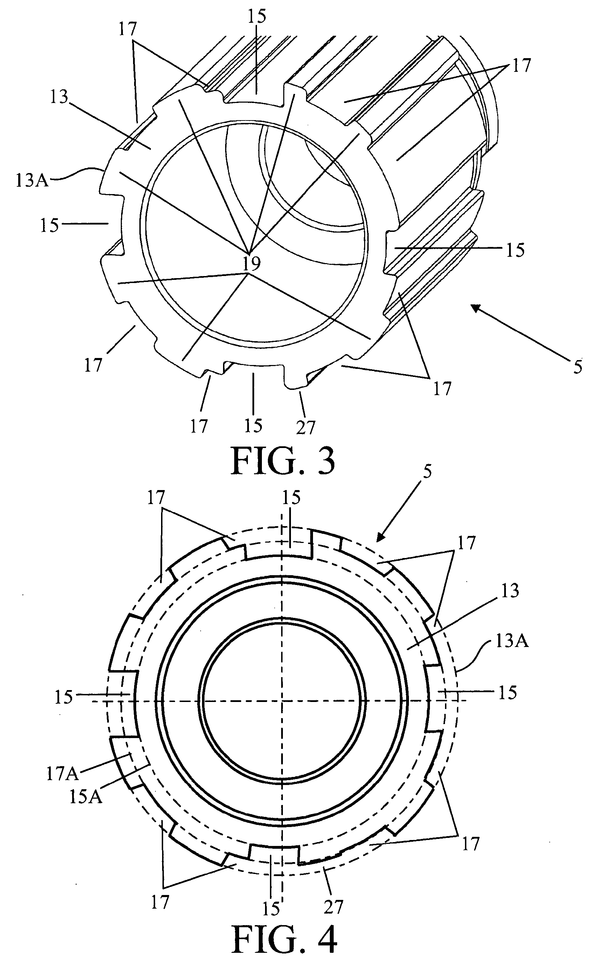

Fig. 2 shows a detailed view of the rear axle 3 of a bicycle with the attached sprocket mounting carrier 5 and the sprockets 7 and 8 mounted on it. The sprocket mounting carrier 5 is shown in a perspective view in Fig. 3 and in a cross-sectional view in Fig. 4 and comprises a cylindrical body 13 that on the outside (13A) has grooves 15 and 17 and ribs 19 all extending in axial direction.

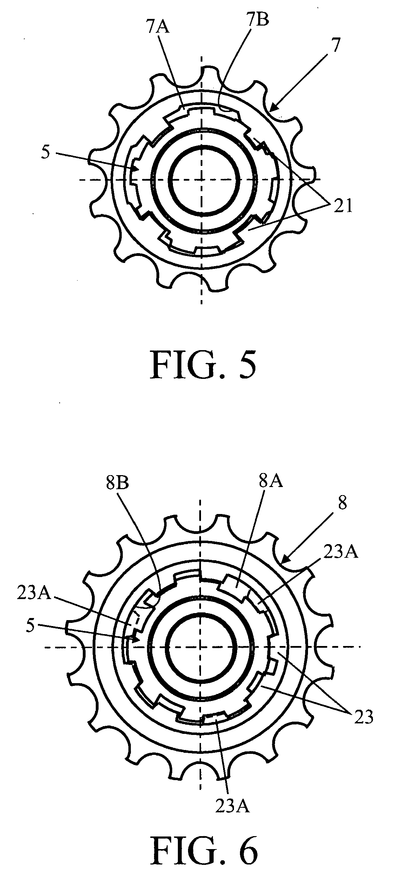

The cross-sectional view of the sprocket mounting carrier 5, see Fig. 4, has such a shape that both sprockets 7 of a first type (see Fig. 5) and sprockets 8 of a second type (see Fig. 6) can be slid onto it. These sprockets 7 and 8 have each a central hole 7A, 8A whose bounding wall 7B, 8B is provided with cams 21, 23. The bottoms of the first and second grooves 15 and 17 are located on circles 15A and 17A respectively, the diameter (first bottom diameter) of the cicle 15A being smaller than the diameter (second bottom diameter) of the circle 17A.

The bottoms and side walls of the bounding walls of the grooves 15 and 17 in the sprocket mounting carrier 5, when the sprockets 7 and 8 are located on the sprocket mounting carrier 5, engage with the tops and side walls of the cams 21 and 23 of the sprocket, so that the sprockets are fixed relative to the sprocket mounting carrier 5 in both radial and tangential direction, which is to say that the sprockets cannot move or can hardly move relative to the sprocket mounting carrier.

The bounding walls of the holes 7A and 8A in the sprockets 7 and 8 are different from each other in that, if the sprockets are concentrically present on each other, the cams 21 of one sprocket do not fully overlap the cams 23 of the other sprocket. The side walls of the cams 21 and 23 of both sprockets 7 and 8 are at least for part of the surface in contact with the opposite side walls of the bounding walls of the grooves 15 and 17 of the sprocket mounting carrier 5.

The shape of the cross section of the sprocket mounting carrier 5 (see Fig. 4) may be determined by putting the two sprockets 7 and 8 concentrically on each other, while the shape of the central hole forms the shape of the outside of the sprocket mounting carrier 5. The two sprockets 7 and 8 can be turned relative to each other, so that different shapes of the sprocket mounting carrier 5 are possible. The preferred embodiments of the sprocket mounting carrier 5 may be obtained by putting the sprockets on each other in such a way that as many parts of the side walls of the cams form the limitation of the hole.

The shape of the sprocket mounting carrier 5 is furthermore such that at least the sprocket having the largest diameter hole is centred on the tops of the cams. Preferably, also the sprocket having the smallest diameter hole is centred on the tops of the cams. The latter, however, is not necessary; this sprocket can also be centred on the outside of the cylindrical body 13 of the sprocket mounting carrier 5.

The second sprocket 8 may also have nine cams 23, see Fig. 6, so in addition to the six cams 23 already present there are three extra cams 23A. For carrying these sprockets too, the sprocket mounting carrier 5 should accommodate at least eight second grooves 17 in the outside wall of the cylindrical body 13.

The first gear wheels 7 are furthermore provided with a boss 25 which is located beside one of the first cams 21, see Fig. 5. The top of this boss 25 is present on a circle which has a top diameter that is larger than the first top diameter and smaller than the second top diameter. A recess 27 beside one of the first grooves 15 and arranged as a continuation of this groove is provided in the sprocket mounting carrier 5. The bottom of this recess is present on a circle that has a third bottom diameter which is larger than the first bottom diameter and smaller than the second bottom diameter and which is equal or slightly smaller than the third top diameter.

Albeit the invention has been described in the foregoing with reference to the drawings, it should be pointed out that the invention is not by any manner or means restricted to the embodiments shown in the drawings. The invention also extends over any embodiment deviating from the embodiment shown in the drawing Figures within the scope defined by the claims.

## Claims

1. A sprocket mounting carrier (5) for a bicycle (1) for carrying first sprockets (7) which have a central hole (7A) of which the bounding wall (7B) has at least four first cams projecting inwardly (21) and whose tops are present on a circle that has a first top diameter, which sprocket mounting carrier (5) comprises a cylindrical body (13) having an outside (13A) with an outside diameter, the body (13) on the outside being provided with at least four first grooves (15) extending in axial direction whose bottoms are present on a circle (15A) that has a first bottom diameter, in which first grooves (15), in the event of the presence of a first sprocket (7) on the sprocket mounting carrier (5), the first cams (21) are present, and the cams engage with the grooves and/or the bounding wall engages with the outside, so as to achieve that the first sprocket both in radial direction and in at least one tangential direction cannot move or can hardly move relative to the sprocket mounting carrier, wherein the sprocket mounting carrier (5) is furthermore suitable for carrying second sprockets (8) that have a further central hole (8A) whose bounding wall (8B) is provided with at least six second cams (23) projecting inwardly and whose tops are present on a circle that has a second top diameter, **characterized in that** the outside wall of the cylindrical body further accommodates at least five second grooves (17) whose bottoms are present on a circle (17A) that has a second bottom diameter, where the first bottom diameter is smaller than the second bottom diameter, which second grooves (17) in the presence of a second sprocket (8) on the sprocket mounting carrier (5) engage with the second cams (23), and/or the bounding wall of the further central hole engages with the outside in the same manner as is the case with the first sprockets (7).

2. A sprocket mounting carrier (5) as claimed in claim 1, **characterised in that** the outside wall of the cylindrical body (13) accommodates at least eight second grooves (17).

3. A sprocket mounting carrier (5) as claimed in claim 1 or 2, **characterised in that** the first gear wheels (7) comprise at least one boss (25) located beside one of the first cams (21) and adjoining same, the top of which boss being present on a circle that has a third top diameter which is larger than the first top diameter and smaller than the second top diameter, a recess (27) being present in the sprocket mounting carrier (5) beside one of the first grooves (15) and arranged as a continuation of this first groove, the bottom of this recess being present on a circle that has a third bottom diameter which is larger than the first bottom diameter and smaller than the second bottom diameter and is equal to or slightly smaller than the third top diameter.

## Patentansprüche

1. Kettenradträger (5) für ein Fahrrad (1) zur Aufnahme von ersten Kettenrädern (7) mit einer Zentralbohrung (7A), von der die Begrenzungswand (7B) mindestens vier nach innen ragende erste Nasen (21) enthält, von denen die Spitzen sich auf einem Kreis mit einem ersten Spitzendurchmesser befinden, welcher Kettenradträger (5) einen Zylinderkörper (13) umfasst mit einer Außenseite (13A) mit einem Außendurchmesser, welcher Körper (13) an der Außenseite mindestens vier in Axialrichtung sich erstreckende erste Nuten (15) enthält, von denen die Böden sich auf einem Kreis (15A) mit einem ersten Bodendurchmesser befinden, in welchen ersten Nuten (15) sich bei Vorhandensein eines ersten Kettenrads (7) auf dem Kettenradträger (5) die ersten Nasen (21) befinden, und die Nasen mit den Nuten zusammenwirken und/oder die Begrenzungswand mit der Außenseite so zusammenwirkt, dass das erste Kettenrad sowohl in radialer wie in mindestens einer tangentialen Richtung sich nicht oder kaum in Bezug auf den Kettenradträger bewegen kann, wobei der Kettenradträger (5) ferner zum Tragen von zweiten Kettenrädern (8) mit einer weiteren Zentralbohrung (8A) geeignet ist, von der die Begrenzungswand (8B) mindestens sechs nach innen ragende zweite Nasen (23) enthält, von denen die Spitzen sich auf einem Kreis mit einem zweiten Spitzendurchmesser befinden, **dadurch gekennzeichnet, dass** in der Außenwand des Zylinderkörpers sich ferner mindestens fünf zweite Nuten (17) befinden, von denen die Böden sich auf einem Kreis (17A) mit einem zweiten Bodendurchmesser befinden, wobei der erste Bodendurchmesser kleiner als der zweite Bodendurchmesser ist, welche zweiten Nuten (17) bei Vorhandensein eines zweiten Kettenrads (8) auf dem Kettenradträger (5) mit den zweiten Nasen (23) zusammenwirken und/oder die Begrenzungswand der weiteren Zentralbohrung mit der Außenseite wie bei den ersten Kettenrädern (7) zusammenwirkt.

2. Kettenradträger (5) nach Anspruch 1, **dadurch gekennzeichnet, dass** sich an der Außenwand des Zylinderkörpers (13) mindestens acht zweite Nuten (17) befinden.

3. Kettenradträger (5) nach Anspruch 1 oder 2, **dadurch gekennzeichnet, dass** die ersten Zahnräder (7) mindestens eine neben eine der ersten Nasen (21) vorhandene und an diese Nase angrenzende Erhöhung (25) besitzen, von der die Spitze sich auf einem Kreis mit einem dritten Spitzendurchmesser befindet, der größer ist als der erste Spitzendurchmesser und kleiner als der zweite Spitzendurchmesser, wobei sich im Kettenradträger (5) neben einer der ersten Nuten (15), an diese Nute anschließend eine Vertiefung (27) befindet, deren Boden sich auf einem Kreis mit einem dritten Bodendurchmesser befindet, der größer ist als der erste Bodendurchmesser und kleiner als der zweite Bodendurchmesser und gleich oder etwas kleiner als der dritte Spitzendurchmesser.

## Revendications

1. Porte-pignons (5) pour bicyclette (1) pour porter de premiers pignons (7) qui sont pourvus d'un trou central (7A) dont la paroi de délimitation (7B) est pourvue d'au moins quatre premières crêtes (21) pointant vers l'intérieur et dont les sommets sont présents sur un cercle ayant un premier diamètre de sommet, lequel porte-pignons (5) comprend un corps cylindrique (13) pourvu d'une face extérieure (13A) ayant un diamètre extérieur, lequel corps (13) est pourvu sur sa face extérieure d'au moins quatre premières rainures (15) faisant saillie dans le sens axial et dont les fonds se trouvent sur un cercle (15A) ayant un premier diamètre de fond, premières rainures (15) dans lesquelles, en présence d'un premier pignon (7) sur le porte-pignons (5), se trouvent les premières crêtes (21), et les crêtes travaillent de pair avec les rainures et/ou la paroi de délimitation travaille de pair avec la face extérieure, de telle sorte que le premier pignon ne puisse pas ou puisse à peine bouger par rapport au porte-pignons aussi bien en direction radiale qu'en au moins une direction tangentielle, où le porte-pignons (5) est de plus adapté pour porter des deuxièmes pignons (8) qui sont pourvus d'un autre trou central (8A) dont la paroi de délimitation (8B) est pourvue d'au moins six deuxièmes crêtes (23) pointant vers l'intérieur, dont les sommets sont présents sur un cercle ayant un deuxième diamètre de sommet, **caractérisé en ce que** dans la paroi extérieure du corps cylindrique se trouvent de plus au moins cinq deuxièmes rainures (17), dont les fonds se trouvent sur un cercle (17A) ayant un deuxième diamètre de fond, où le premier diamètre de fond est plus petit que le deuxième diamètre de fond, lesquelles deuxièmes rainures (17), en présence d'un deuxième pignon (8) sur le porte-pignons (5), travaillent de pair avec les deuxièmes crêtes (23), et/ou la paroi de délimitation de l'autre trou central travaille de pair avec la face extérieure de la même manière que pour les premiers pignons (7).

2. Porte-pignons (5) selon la revendication 1, **caractérisé en ce que** dans la paroi extérieure du corps cylindrique (13) se trouvent au moins huit deuxièmes rainures (17).

3. Porte-pignons (5) selon la revendication 1 ou 2, **caractérisé en ce que** les premiers pignons (7) sont pourvus d'au moins un rehaussement (25) se trouvant près d'une des premières crêtes (21) et étant limitrophe de cette crête, rehaussement dont le sommet se trouve sur un cercle ayant un troisième diamètre de sommet qui est plus grand que le premier diamètre de sommet et plus petit que le deuxième diamètre de sommet, où dans le porte-pignons (5) se trouve un renfoncement (27) près d'une des premières rainures (15) et se connectant sur cette rainure, renfoncement dont le fond se trouve sur un cercle ayant un troisième diamètre de fond qui est plus grand que le premier diamètre de fond et plus petit que le deuxième diamètre de fond et qui est égal au ou légèrement plus petit que le troisième diamètre de sommet.
